**Europäisches Patentamt**

**European Patent Office**

**Office européen des brevets**

(19)

(11) Publication number : **0 500 527 B1**

# (12) EUROPEAN PATENT SPECIFICATION

(45) Date of publication of patent specification :
07.12.94 Bulletin 94/49

(51) Int. Cl.⁵ : **F25B 17/00**

(21) Application number : **90909905.3**

(22) Date of filing : **20.06.90**

(86) International application number :
**PCT/US90/03465**

(87) International publication number :
**WO 91/00979 24.01.91 Gazette 91/03**

(54) **Discrete constant pressure staging of solid-vapor compound reactors.**

(30) Priority : **07.07.89 US 376426**

(43) Date of publication of application :
**02.09.92 Bulletin 92/36**

(45) Publication of the grant of the patent :
**07.12.94 Bulletin 94/49**

(84) Designated Contracting States :
**AT BE CH DE DK ES FR GB IT LI LU NL SE**

(56) References cited :
**EP-A- 0 071 271**
**US-A- 1 932 492**
**US-A- 2 088 276**
**US-A- 4 183 227**
**US-A- 4 183 734**
**US-A- 4 439 994**
**US-A- 4 610 148**
**US-A- 4 616 692**

(56) References cited :
**US-A- 4 623 018**
**US-A- 4 694 659**
**US-A- 4 713 944**
**US-A- 4 754 805**
**US-A- 4 765 395**
**US-A- 4 823 864**

(73) Proprietor : **ROCKY RESEARCH**
**1598 Foothill Drive**
**Boulder City, NV 89005 (US)**

(72) Inventor : **ROCKENFELLER, Uwe**
**1435 Rawhide Road**
**Boulder City, NV 89005 (US)**
Inventor : **KIROL, Lance, D.**
**1316 Marita Drive**
**Boulder City, NV 89005 (US)**

(74) Representative : **Maury, Richard Philip et al**
**Sommerville & Rushton**
**11 Holywell Hill**
**St. Albans Herts. AL1 1EZ (GB)**

EP 0 500 527 B1

## Description

BACKGROUND OF THE INVENTION

The use of compounds comprising solid-vapor compositions formed by adsorption of gas molecules on a solid adsorbent as heat pump working materials is known in the art. Heat pump systems using such materials have a number of advantages over other heat pumps for residential and commercial space conditioning, industrial heat pumping and refrigeration. Such advantages include higher temperature lift created by the solid-vapor media as compared to other sorption media thus eliminating the need for cooling towers or lift staging. Moreover, the apparatus use for the solid-vapor compound heat pumps require few, if any, moving parts, resulting in simple and reliable hardware. Additionally, such systems do not use the objectionable CFC's.

The solid-vapor compounds suitable for heat pumps include complex compounds which are materials which adsorb molecules of gas to form coordinative bonds in which the gaseous reactant coordinates via electron displacement with the solid adsorbent, commonly a solid metal inorganic salt. The adsorption/desorption process releases significant heat during adsorption and adsorbs energy during the desorption phase. Unlike most other sorption processes, the entire adsorption or desorption reactions may occur at constant temperature thus eliminating problems with hot and cold sorber ends. Useful gaseous reactants include water, ammonia, methanol, methane, ethane and the like. A number of such materials are described in U.S. patents 4,822,391 and 4,848,994.

We acknowledge the disclosure in US Patent No. 4,765,395 of a multiple reactor system utilising two sets of reactors, the reactors in one set incorporating a zeolite-water adsorbent pair and the other set using activated charcoal-methanol.

Heat activated heat pumps consist of a heat engine subsystem which generates high pressure refrigerant vapor, essentially a thermal compressor, and a heat pump subsystem which uses high pressure refrigerant to produce cooling or heat pumping. The thermal compressor, heat pump, and their combination in a heat activated heat pump comprise useful thermodynamic systems which make advantageous use of solid-gas reactions. It is an object of the present invention to use such reactions to even greater advantage and efficiency. Moreover, thermal energy and cool storage systems may also be improved by using staging techniques of the present invention with respect to charge and discharge temperatures as well as energy density.

The invention is a method, as defined in Claim 1, of operating a heat pump utilising solid-vapour compound reactions in a reactor system; corresponding apparatus as defined in Claim 31; a method, as defined in Claim 37, of operating a mechanical or pressure driven heat pump or refrigeration system; and corresponding heat pump apparatus as defined in Claim 43.

The system of the invention achieves improved efficiency using relatively simple hardware. These as well as other advantages will be evident from the following detailed description of preferred embodiments with reference to the accompanying drawings, in which:-

Fig. 1 is a schematic illustrating and example of an apparatus used in the system of the invention;

Fig. 2 is a phase diagram illustrating a preferred embodiment the process of the invention carried out in the apparatus illustrated in Fig. 1;

Fig. 3 illustrates another apparatus embodiment for carrying out the method according to the invention;

Fig. 4 illustrates a mechanically activated heat pump apparatus used int he system of the invention;

Fig. 5 is a phase diamgram illustrating a preferred embodiment of the process of the invention carried out in the apparatus illustrated in Fig. 4; and

Fig. 6 is a phase diagram illustrating another embodiment of the invention using constant pressure staging at different pressure and temperature levels.

Heat Activated Heat Pump

As used herein, the term "compound" is intended to mean any reaction product formed by adsorption and desorption of a gaseous reactant on a solid reactant within the scope of the invention. In practicing the discrete staging of a constant pressure engine cycle according to the invention, a plurality of two or more different solid reactants are selected, and a different solid reactant is introduced into a different reactor or reaction site in the heat pump apparatus. The different compounds of a set, series or group of compounds used in the process are selected such that the temperature of adsorption of the low vapor pressure compound at low pressure, is higher than the desorption temperature of the next higher vapor pressure compound at high pressure. Each of the compounds of such sets or groups each also exhibit different vapor pressure curves, i.e., each has a different vapor pressure-temperature relationship, and which is independent of the concentration of the gaseous reactant. By selecting appropriate compounds and arranging them in the aforesaid sequence, the process cycle will be carried out so that the heat of adsorption is always at an adequate temperature to drive the next or subsequent desorption reaction in the cycle. Preferably the compounds of the series are selected so that none of the compounds in the same reactor have an additional coordination step at lower equilibrium temperature which may adsorb more reactant gas from the other compounds during temperature equilibrium or shutdown condition which would reduce cycle performance during intermittent operation. Moreover, masses of each compound are adjusted so that an approximately equal amount of heat is required to desorb each compound.

Specific reactants used to form compounds useful in the invention include metal oxides, hydrides, halides, carbonates, nitrites, nitrates, oxalates, sulfides and sulfates. Preferred metals for the inorganic salts are selected from alkali and alkaline earth metals, transition metals, aluminum, zinc, cadmium and tin. Preferred transition metals are manganese, iron, nickel, and cobalt. Hereinafter these reactants will be sometimes referred to as solids, salts or solid reactants.

Gaseous reactants which are adsorbed on the solids to form compounds which are especially useful in the processes of the invention are ammonia, water, methyl amine and methanol, ammonia being especially suitable because it is stable, and forms high energy complexes. However, hydrogen, carbon dioxide, sulfur dioxide, other lower alkanols, lower alkanes, particularly methane and ethane, pyridine, alkylamines, polyamines and phosphine may also be used. These gaseous reactants may also be referred to as refrigerants herein.

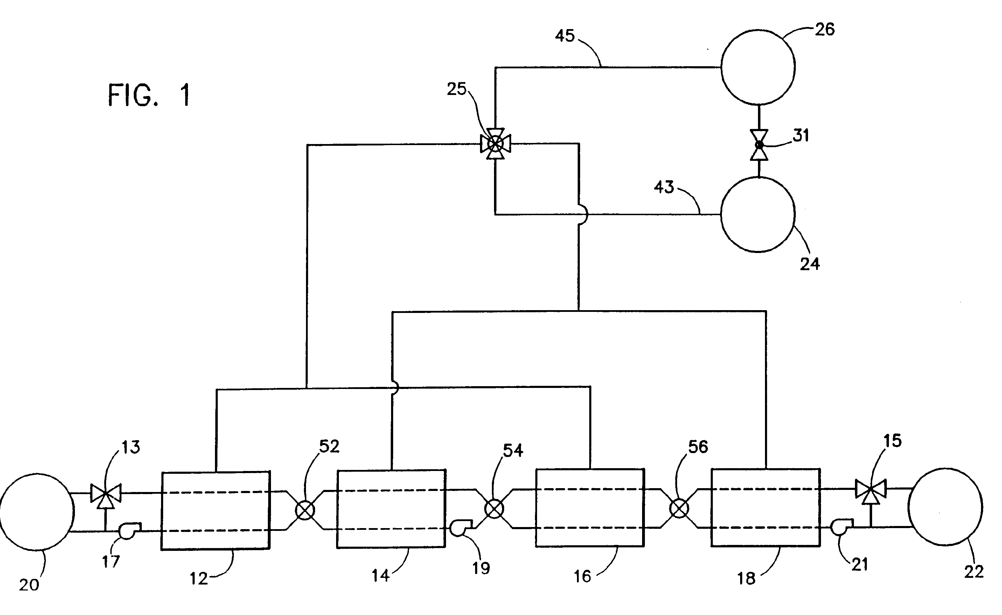

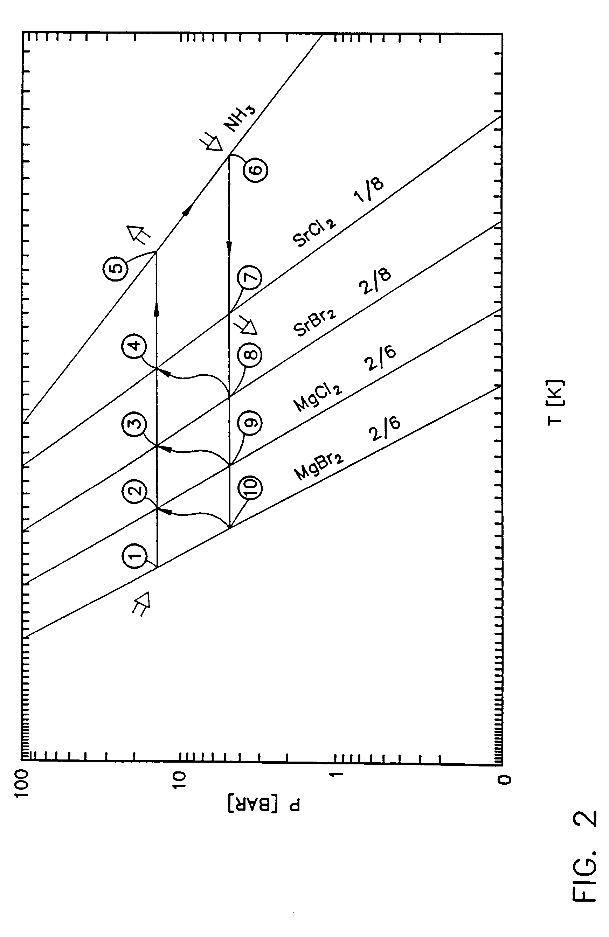

In a specific example of a set or series of compounds, to illustrate a system according to the invention, salts $MgBr_2$, $MgCl_2$, $SrBr_2$ and $SrCl_2$ are used in a heat pump consisting of four separate reaction vessels or separate heat-transfer regions in one or more reactors. The compounds comprise the ammonia ligand complex compound of the aforesaid salts with the $MgBr_2$ and $MgCl_2$ salts forming complexes containing 2 to 6 $NH_3$, $SrBr_2$ containing 2 to 8 $NH_3$ and $SrCl_2$ containing 1 to 8 $NH_3$. Fig. 1 illustrates schematically an example of an apparatus embodiment for carrying out the discrete constant pressure staged heat pump. The salts are charged to reactors 12, 14, 16 and 18, respectively, in successive ascending order of the complex compound ligand vapor pressure. Thus, first reactor 12 is charged with $MgBr_2$, reactor 14 with $MgCl_2$, reactor 16 with $SrBr_2$, and reactor 18 with $SrCl_2$. The apparatus includes a burner 20, heat exchanger 22, evaporator 24 and condenser 26 together with appropriate valves and conduits for directing ammonia gas from and to the reactors and the condenser and evaporator, and valves 52, 54 and 56 for directing heat transfer fluid between the reactors as well as pumps and heat exchange conduits for pumping heat transfer fluid within the system. In the first half-cycle, reactor 12 containing the high temperature salt $MgBr_2$ is at high pressure corresponding to (1) in Fig. 2 and reactor 16 containing $SrBr_2$ is also at high pressure corresponding to (3). Reactors 14 and 18 are at low pressure, reactor 18 containing $SrCl_2$ and reactor 14 containing $MgCl_2$, corresponding to (7) and (9), respectively.

During the first-half cycle, valves 52 and 56 are positioned so that pump 19 circulates heat transfer fluid through reactors 14 and 16, thereby transferring energy released during gas adsorption from reactor 14 to the solid reactant in reactor 16 to drive the desorption reaction occurring there. With the valve settings and proper positioning of valve 15, energy released during the adsorption in reactor 18 is rejected or recovered via heat exchanger 22. In this first half of the heat exchange cycle, valve 25 is also positioned for directing ammonia vapor from reactors 12 and 16 to condenser 26 and from evaporator 24 to reactors 14 and 18. Pump 17 circulates heat transfer fluid from burner 20 to reactor 12 to drive the desorption of the compound in that reactor.

Before start of the second half-cycle of the process, a short phase of heat recuperation and temperature shifting is required. The valve positions are changed so that reactors 12 and 14 are coupled, and reactors 16 and 18 are coupled, respectively, for heat transfer communication. Heat transfer fluid is pumped through each pair of coupled reactors to transfer heat from the hotter to the colder reactor. Thus, reactor 12 is cooled while reactor 14 is heated; reactor 16 is cooled while reactor 18 is heated. This terminates the recuperative and temperature adjustment phase in preparation for the second half-cycle.

In the second half-cycle burner 20 is not used. Solid reactant in reactor 14 desorbs its gaseous reactant, driven by heat from the adsorption reaction in reactor 12. The compound in reactor 18 desorbs, driven by heat released from adsorption of the compound in reactor 16. Ammonia from the desorption reactions is directed to the condenser 26, and ammonia for the adsorption reactions is obtained from evaporator 24.

At the conclusion of the second half-cycle, another phase of recuperation and temperature adjustment as previously described readies the system for repeating the first half-cycle. In this example, using the aforesaid adsorption and desorption pressures and temperatures, the condensation temperature in condenser 26 is 315°K and in the evaporator, 275°K. The apparatus of Figure 1 could also be modified with reactors 12 and 16 combined and reactors 14 and 18 combined in single vessels, respectively, since both reactors in either pair are always at the same pressure. All four compounds may be located in a single reactor, with the heat pump consisting of two such reactors, each operating at alternately high and low pressure.

Points 1-10 on the phase diagram of Fig. 2 illustrate the discrete staging that occurs in the reactors at the various temperatures and pressures as the ammonia ligand is alternately adsorbed and desorbed on the metal salts. At (1), prime heat from a source, for example burner 20 in Fig. 1, is used to partially or fully desorb $MgBr_2 \cdot 6NH_3$ to $MgBr_2 \cdot 2NH_3$. At (2), $MgCl_2 \cdot 6NH_3$ is desorbed, at (3) $SrBr_2 \cdot 8NH_3$ is desorbed, and at (4) $SrCl_2 \cdot 8NH_3$ is desorbed. Gaseous reactant from the desorptions is condensed at (5) releasing heat, which may be recovered by any heat exchange means. The desorption reactions are carried out at a single pressure, 16.28 Bar.

The adsorption phase of the reaction is carried out at a lower pressure, 4.6 Bar with the aforesaid complexes, ammonia being directed to a lower pressure and evaporated at (6), absorbing heat. The ammonia vapor is then adsorbed into the four complex compounds at points (7), (8), (9) and (10). Heat released from the adsorption at (7) is rejected externally by heat exchanger 22 (Fig. 1), and heat from the other three adsorption reactions is used to drive the desorption reactions illustrated by the arrows between points (8) and (4), (9) and (3), and (10) and (2), respectively.

At the end of this portion of the cycle, the process is reversed so that, for example, complex at (1), now desorbed, is lowered in temperature and pressure to the conditions at (10) for adsorption. The complex at (10), which is now adsorbed, is increased in temperature and pressure to the conditions of (1), as are complex compounds in the other three reactors. Thus, the output from the cycle, depending on the intended application, may be used for cooling obtained from ammonia evaporation at (6), or the heat released from the process at (5) and (7) in a quasi-continuous mode.

Referring again to the example using four aforesaid complex compounds and points (1)-(10) in Fig. 2, the following table illustrates the different temperatures and pressures at which the complex compounds adsorb and desorb the ammonia ligand.

## Table I

| $NH_3$ | Desorb (16.28 Bar) | | Adsorb (4.6 Bar) | |
|---|---|---|---|---|
| | | Temp. $^\circ K$ | | |
| $MgBr_2.2/6$ | (1) | 604 | 544 | (10) |
| $MgCl_2.2/6$ | (2) | 495 | 449 | (9) |
| $SrBr_2.2/8$ | (3) | 432 | 391 | (8) |
| $SrCl_2.1/8$ | (4) | 374 | 342 | (7) |

From this example of a set or series of complex compounds it is shown that the temperature of adsorption of the low vapor pressure salt, at the low adsorbing pressure, is higher than the desorption temperature of the next higher vapor pressure salt. Observing Fig. 2, this critical feature will be evident from the complex compounds in the table noting the points of the cycle stages which correspond to the phase diagram numbers.

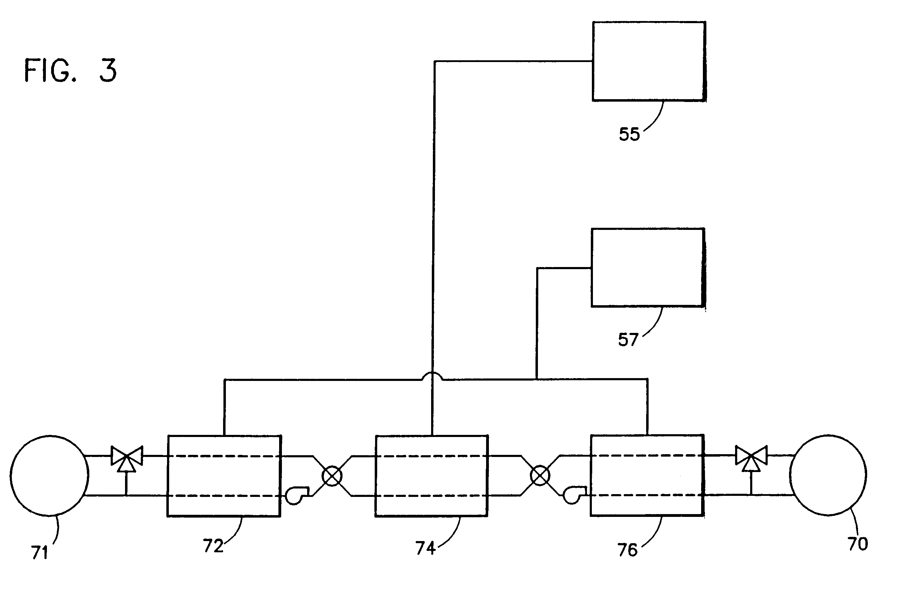

Referring to Fig. 3, a three reactor apparatus utilizing a system according to the invention is shown. Examples of suitable compounds for use in such an apparatus for carrying out a discrete constant pressure adsorption/desorption process is shown in Tables II and III together with the desorption and adsorption temperatures and pressures. The compounds are listed in their ascending order from the lowest to the highest ammonia vapor pressure. In the example of Fig. 3, instead of using an evaporator and condenser illustrated in Fig. 1, NaBr or $BaCl_2$ in reactors 55 and 57 is used to desorb and adsorb the ammonia from and to reactors 72, 74 and 76. In this example, in each of the respective reactors, a different one of the salts forming the complex compounds of Table II or III is placed in each of the reactors, so that the compound having the lowest gas vapor pressure is in first reactor 72, and compounds of successively higher gaseous reactant vapor pressures in the successive reactors 74 and 76. Again, this successive positioning of compounds based on ascending vapor pressures in corresponding successive reactors or reaction regions as illustrated in the drawing and previously described, is critical to the invention.

Burner 71 and heat exchanger 70 are utilized in a manner as previously described in Fig. 1 (for burner 20 and heat exchanger 22). Heat is also exchanged externally with heat transfer fluid flowing through reactors 55 and 57. These reactors alternatively provide heating and cooling. During one half-cycle, reactor 57 provides cooling while 55 is heating, and in the other half-cycle 55 is cooling and 57 is heating. The advantages of using the sodium bromide, or other solid reactant, for adsorbing/desorbing the gaseous reactant as opposed to the condenser/evaporator equipment include (1) higher energy density in the adsorption/desorption reactions as compared to evaporation and condensation of the gas, resulting in higher coefficients of performance and less system mass, and (2) the ability to reject heat at high temperature with lower system pressure than would be required using refrigerant condensation. For continuous cooling two or more subsystems can be operated in a phase shifted mode.

### Table II

| $NH_3$ | Desorb (16.28 Bar) | Adsorb (4.6 Bar) |
|---|---|---|
| | Temp. °K | |
| $MgBr_2 \cdot 2/6$ | 604 | 544 |
| $CoCl_2 \cdot 2/6$ | 495 | 449 |
| $SrCl_2 \cdot 1/8$ | 374 | 342 |

### Table III

| $NH_3$ | Desorb (7.31 Bar) | Adsorb (1.44 Bar) |
|---|---|---|
| | Temp. °K | |
| $MgBr_2 \cdot 2/6$ | 562 | 502 |
| $CoCl_2 \cdot 2/6$ | 461 | 416 |
| $CaCl_2 \cdot 2/4$ | 356 | 320 |

Thermal Compressor

The process and system of the invention may also be used as a thermal compressor, which is a subsystem of a heat activated heat pump. For example referring to Fig. 1, by removing condenser 26, evaporator 24, and valve 31, the resulting sub-system apparatus is a thermally activated compressor which receives low pressure vapor through conduit 43 and delivers high pressure vapor through conduit 45. Such a thermal compressor may be used as a less expensive alternative to an electrically driven compressor for obtaining pressurized gaseous reactants. Thus, constant pressure staging of appropriate compounds can provide efficient thermal compression of any gaseous reactant, such as water, ammonia, carbon dioxide, sulfur dioxide, methanol and other lower alkanols, alkylamines, polyamines, and phosphine. Hydrogen can also be compressed by use of hydrides in the reactors in place of complex compounds while carbon dioxide can be used with metal oxide/metal carbonate reactants, and water can be used with metal oxide/metal hydroxide or complex compound reactants. Such thermal compression using a process of the present invention is more efficient than conventional thermal compressors because heat is cascaded through several stages and high pressure vapor is generated at each stage.

Heat Pumps Activated by Mechanical Work or Pressure

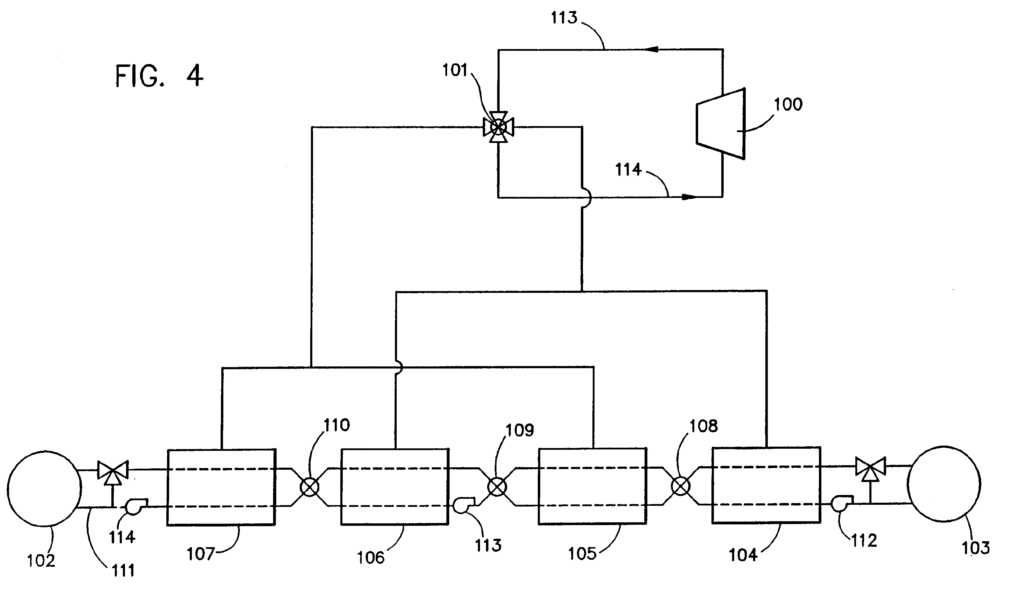

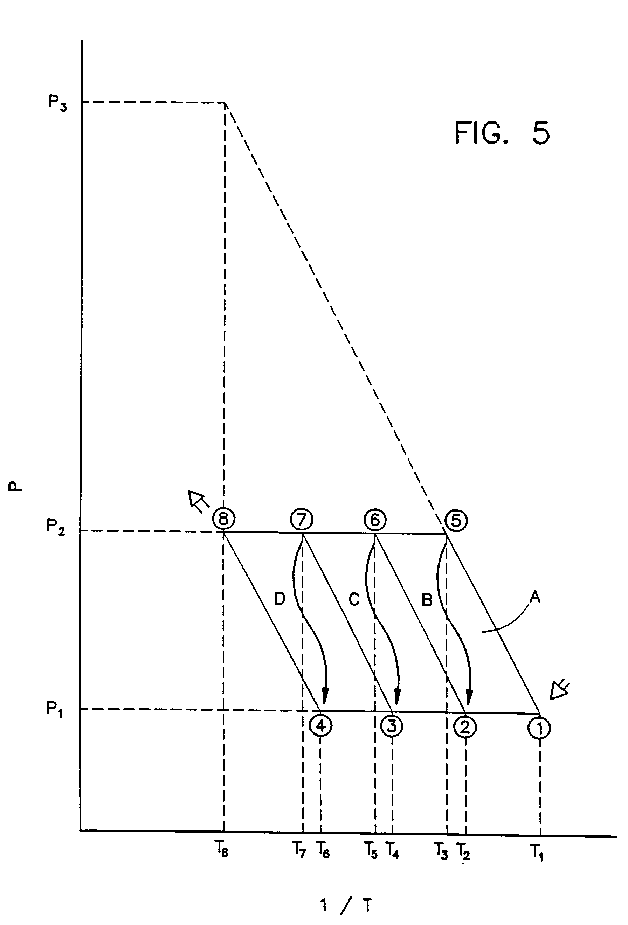

The constant pressure staging process of the invention may also be used in a heat pump which receives high pressure refrigerant vapor, discharges low pressure vapor, and produces cooling or heating. The high pressure refrigerant vapor can be provided by a mechanical compressor, thermal compressor, for example a constant pressure staged thermal compressor described above, or other source. The constant pressure staged heat pump is most advantageous when coupled with a mechanical compressor, because efficiency and reliability of mechanical compressors increase as compression ratio is decreased. Such an apparatus is illustrated in Fig. 4, and process conditions shown in Fig. 5. Compounds A, B, C and D are contained in reactors 104, 105, 106, and 107, respectively. During the first half-cycle, valve 101 is positioned such that high pressure vapor delivered through conduit 113 from compressor 100 is directed to reactors 104 and 106. Compound A in reactor 104 and complex C in reactor 106 are initially at high pressure P2 in the first half-cycle, and B and D in reactors 105 and 107 are at low pressure P1. Compound A adsorbs at high pressure point (5), releasing heat which drives desorption of compound B at low pressure point (2); compound C adsorbs at high pressure (7), releasing heat which drives desorption of compound D at low pressure (4). Vapor generated during desorption of compounds B and D is routed through valve 101 and conduit 114 to the inlet (low pressure) side of compressor 100.

During the second half-cycle, compounds A and C are at low pressure, and compounds B and D are at high pressure. Valve 101 is positioned to direct high pressure vapor from the compressor to compounds B and D in vessels 105 and 107, and to direct low pressure vapor from reactors 104 and 106 to the inlet side of compressor 100. During this half-cycle, compound, A desorbs at low pressure (1) producing refrigeration at temperature T1. Compound B adsorbs at high pressure (6), and heat released is used to drive the desorption of complex C at low pressure (3). Compound D desorbs at high pressure (8), delivering heat at temperature T8. Cooling at T1, heating at T8, or both, are the useful products of the heat pump operation. Continuous cooling or heating is provided by utilizing two or more banks of reactors, operating out of phase.

The number of compounds used can be two or greater. The lowest temperature compound (A in Fig. 5) may be replaced by evaporation and condensation of the gaseous reactant. The utility and improvement of the invention is evident from Fig. 5. Heat is lifted from temperature T1 to T8 while operating between pressures P1 and P2. Use of only compound A (or refrigerant condensation/evaporation) would only lift heat to T3 at the same pressures. A peak pressure of P3, several orders of magnitude higher than P2, would be required to obtain temperature lift to T8.

Compounds and operating conditions are selected such that the high pressure compounds always adsorb at sufficiently high temperature so heat released can be used to drive the next desorption. Specifically, referring to Fig. 5, T3 must be greater than T2, T5 greater than T4, and T7 greater than T6. Thus, in this embodiment, the successive compounds in the set or group are selected so that the higher temperature adsorbing compound, i.e., the compound that adsorbs at a higher temperature, at high pressure, has an adsorption temperature higher than the desorption temperature of the next succeeding, compound at low pressure. The compounds are located into successive reactors in this ascending adsorption temperature order. Selection of such compounds and high and low reaction pressures will be understood by those skilled in the art. Although the reactions described and shown herein will normally involve the next successive higher vapor pressure compound, in certain instances, such as heat pump operations under extreme temperature conditions, or multiple temperature level operations, it may be desirable to skip one or more compounds in any specific cycle.

The discrete constant pressure staging cycle process disclosed herein has a number of advantages over previously known heat pump cycles, thermal compressors, and thermal storage. As a heat activated heat pump or thermal compressor, the process of the present invention delivers high coefficient performance, and takes thermodynamic advantage of high driving temperatures, limited only by the stability of the lowest vapor pressure compounds. Multiple staging is performed within the hardware of single staged systems, and results in lower cost than is possible with other two or multi-stage cycles. Between half-cycles, the complex in each stage is heated by drawing heat from the next hotter stage, making regeneration of sensible heat efficient and simple, and improving cycle efficiency as compared to other solid-vapor heat pumps and thermal compressors. Operating as a mechanical or thermal compressor heat pump, the system of the invention makes high temperature lift and low pressure ratios possible. Although separate reactors are shown in the drawings for the different reaction sites the reactions may be carried out in reaction sites or chambers of a single reactor. Thus, as used herein, the term reactors is intended to include one or more reaction sites or chambers in a single reactor as well as multiple reactors.

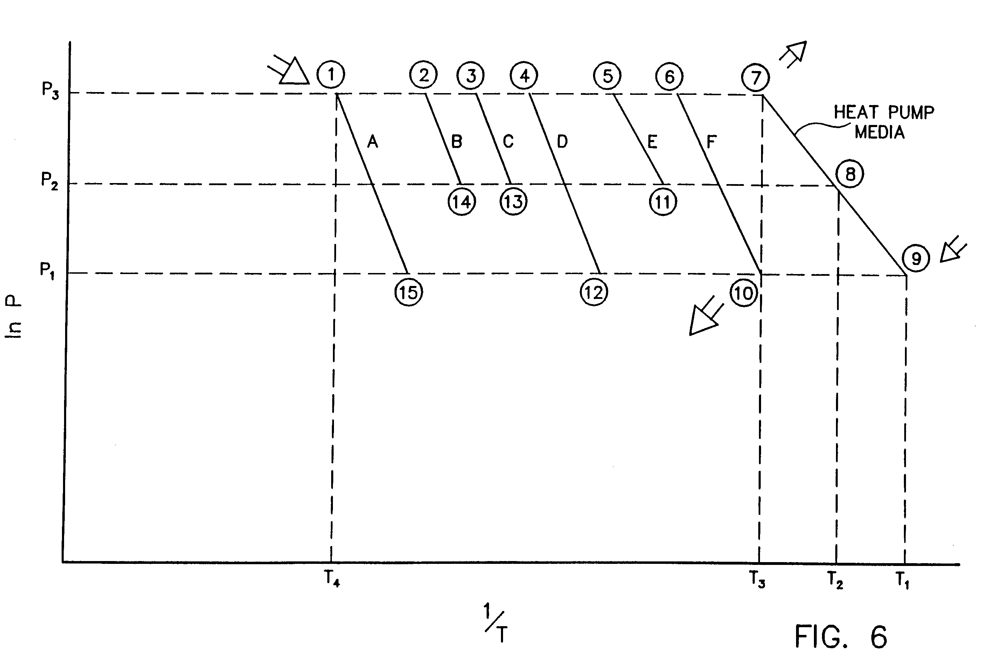

Constant pressure staging of the invention can also be used to receive or deliver vapor at more than one pressure level. This capability allows for multiple temperature refrigeration, multiple temperature heat delivery from a heat pump, thermal storage at different temperature levels, or thermal compression simultaneously operating at more than one compression ratio. The number of different pressure ratios possible is equal to the number of stages in the cycle. Fig. 6 is a phase diagram illustrating an example of a six stage cycle for providing refrigeration at two different temperatures. Refrigeration temperatures T1 and T2 establish system pressures P1 and P2, according to the vapor pressure function of the heat pump working media, which can be a pure refrigerant undergoing phase change, or refrigerant involved in any sorption process. Heat rejection temperature T3 at pressure P3 is also on the heat pump media vapor pressure line. The cycle operates in the manner as described previously. Heat is input at a temperature T4, which is relatively high compared to T3. Energy input at state point (1) drives desorption of compound A. Adsorption at point (15) releases heat to drive desorption at point (2), and so on for compounds B-F. Heat input at point (1) is effectively cascaded through the cycle, in the state point sequence of 1-15-2-14-3-13-4-12-5-11-6-10. Heat release during adsorption at state point 10 is rejected external to the heat pump cycle. The advantage and unique feature of this cycle embodiment is that adsorptions occur at two different pressure levels. Gaseous reactant vapor generated to provide cooling at T1 is at pressure P1 and is adsorbed at state points 10, 12, and 15, while the vapor generated to provide cooling at T2 is at pressure P2 and is adsorbed at points 11, 13, and 14. The selection of pressures for the different stages is dependent on the desired or available media, i.e., solid-vapor, liquid-vapor, etc., and on the amount of cooling to be achieved at each temperature level. It is desirable to maximize the number of stages in a cycle while maintaining adequate heat transfer approach temperatures (temperature differentials) for heat exchange between stages. Moreover, more than two temperature and pressure levels may also be used. Heat may be directed between any state point (reaction chamber) and external heat exchange means in order to input or to take advantage of the multiple cooling and heating temperatures of such a system. For example, such a system may be used in cascaded refrigeration, air heating and hot water supply, as well as in applications with cogeneration systems where excess waste heat is available at multiple temperature levels.

A heat pump incorporating multiple heat rejection temperatures, or thermal compressor using multiple delivery pressures, operates in the same manner although some stages of sorption operate below the intermediate pressure level(s). Multiple adsorption and desorption pressures may also be used in a single system.

Although not intended as part of the present invention, the constant pressure staging system may be operated with bivariant media in which the adsorbent vapor pressure is also a function of the refrigerant concentration. Each individual vapor pressure line is replaced by a solution field over which the specific media operates. The resulting system is less practical for use with bivariant solid vapor media, for example zeolites or activated carbon, because solution fields, of reasonable refrigerant concentration spread in the media, are quite wide. Since no overlap of solution fields is acceptable, only a portion of the theoretical solution field and very few stages may be used. Moreover, the large thermal masses and ineffective staging results in low efficiency. Additionally, during shutdown all refrigerant will migrate to the lowest vapor pressure media, further reducing efficiency for cyclic operation. Use of liquid absorbents overcomes some of these bivariant media problems. Each stage of the constant pressure staged cycle would be a narrow concentration range of the media. Media may be pumped from stage to stage such that as it is desorbed and vapor decreased, it moves to a higher temperature stage, and as fluid absorbed refrigerant it moves to a lower temperature stage. Temperature change between stages may be accomplished recuperatively.

## Claims

1. A method of operating a heat pump utilising solid-vapour compound reactions in a reactor system comprising:

   a plurality of three or more reactors (12, 14, 16) each reactor containing a different compound comprising a solid reactant adsorbent and a gaseous reactant adsorbed thereon wherein each of said compounds has a different gaseous reactant vapor pressure, substantially independent of the concentration of gaseous reactant,

   means for heating said reactors including means for directing heat transfer fluids to and from each of said reactors, and

   receiving apparatus for receiving and discharging gaseous reactant from and to said plurality of reactors, comprising (a) a condenser (26) and an evaporator (24), each operatively communicating with said plurality of reactors, (b) adsorbing-desorbing apparatus (55, 57) or (c) a mechanical compressor (100), and including means for directing gaseous reactant between said receiving means and said reactors,

   said method comprising:

   in a first reaction cycle, operating a first portion of said reactors at a temperature resulting in a first pressure, whereby said compound therein desorbs said gaseous reactant in an endothermic reaction, and operating said second portion of said reactors at a second pressure whereby said compound therein adsorbs said gaseous reactant in an exothermic reaction, and

   in a second reaction cycle, operating said first portion of said reactors at said second pressure whereby said compound therein adsorbs said gaseous reactant in an exothermic reaction, and operating said second portion of said reactors at a temperature resulting in said first pressure whereby said compound therein desorbs said gaseous reactant in an endothermic reaction, and

   directing the heat transfer fluid between said reactors in successive ascending order of the respective vapour pressure of the different compounds whereby at least a portion of heat recovered from an exothermic adsorption reaction is directed to a reactor for heating a compound therein for driving an endothermic desorption reaction,

   the method further comprising, during said first reaction cycle, directing gaseous reactant from said first portion of said reactors to said receiving apparatus, and directing gaseous reactant from said receiving apparatus to said second portion of said reactors, and, during said second reaction cycle, directing gaseous reactant from said second portion of said reactors to said receiving apparatus, and directing gaseous reactant from said receiving apparatus.

2. The method of Claim 1 in which said receiving apparatus comprises a condenser (26) and an evaporator (24), said method further comprising directing desorbed gaseous reactant from desorbing reactors to said condenser, directing gaseous reactant from said condenser to said evaporator, and directing gaseous reactant from said evaporator to adsorbing reactors.

3. The method of Claim 2 including recovering heat from gaseous reactant condensation in said condenser.

4. The method of Claim 2 including providing cooling from evaporation of the condensed gaseous reactant in said evaporator.

5. The method of Claim 1 wherein external heat is directed to a first reactor of said first portion of reactors in said first cycle for driving an endothermic reaction therein.

6. The method of Claim 1 including directing at least a portion of the heat released during said exothermic reactions or at least a portion of the heat absorbed during said endothermic reactions to heat exchange means for energy recovery.

7. The method of Claims 1 or 2 wherein said gaseous reactant comprises ammonia, water, hydrogen, carbon dioxide, sulfur dioxide, lower alkanol, alkylamine, polyamine or phosphine.

8. The method of Claim 7 wherein said solid reactant is a metal oxide, hydride, halide, carbonate, nitrate, nitrite, sulfate, oxalate or sulfide.

9. The method of Claim 8 wherein the metal of said solid reactant comprises an alkali metal, alkaline earth metal, transition metal, aluminum, zinc, cadmium, or tin.

10. The method of Claim 8 wherein said solid reactant comprises a double metal chloride, said metals selected from an alkali metal, alkaline earth metal, aluminum, manganese, iron, nickel or cobalt.

11. The method of Claim 9 wherein said gaseous reactant is ammonia and said solid reactant is a halide of said metal.

12. The method of Claims 1, 7, 8 or 9 wherein said compounds adsorb and desorb the same gaseous reactant at different temperatures, respectively, at said reaction pressures, and wherein said different compounds are located in successive reactors in successive ascending order of gaseous reactant vapor pressure.

13. The method of Claim 12 wherein said different compounds are selected such that the adsorption temperature of a lower vapor pressure compound at a low reaction pressure, is higher than the desorption temperature of a successive higher vapor pressure compound at a high reaction pressure.

14. The method of Claim 13 wherein said first pressure is higher than said second pressure.

15. The method of Claim 14 wherein at least a portion of the heat from an exothermic adsorption reaction of a first of said compounds having a lower vapor pressure than a second of said compounds is directed to a reactor containing a compound having the next higher vapor pressure for driving an endothermic desorption reaction thereof.

16. A method of Claim 12 including, in said first reaction cycle, pressurizing a third portion of said reactors at a third pressure whereby said compound therein adsorbs said gaseous reactant in an exothermic reaction, said second and third pressures being different from one another and less than said first pressure.

17. A method of Claim 16 including, in said second reaction cycle, operating said third portion of said reactors at a temperature resulting in said first or second pressure whereby said compound therein desorbs said gaseous reactant in an endothermic reaction.

18. The method of Claim 1 in which said receiving apparatus comprises adsorbing and desorbing means (55, 57), said method further comprising directing desorbed gaseous reactant from desorbing reactors to said adsorbing-desorbing apparatus and directing gaseous reactant from said adsorbing-desorbing apparatus to adsorbing reactors.

19. The method of Claim 18 wherein said gaseous reactant comprises ammonia, water, carbon dioxide, sulfur dioxide, lower alkanol, alkyamine, polyamine or phosphine, and wherein said solid reactant is a metal oxide, halide, carbonate, nitrate, nitrite, sulfate, oxalate or sulfide of an alkali metal, alkaline earth metal, transition metal, aluminum, zinc, cadmium, or tin, or a double metal chloride of metals selected from an alkali metal, alkaline earth metal, aluminum, manganese, iron, nickel or cobalt.

20. The method of Claim 19 comprising selecting said plurality of compounds such that each of said compounds adsorb and desorb the same gaseous reactant at different temperatures, respectively, at said reaction pressures.

21. The method of Claim 20 wherein said compounds are selected such that the adsorption temperature of a lower vapor pressure compound at a low reaction pressure, is higher than the desorption temperature of the next successive higher vapor pressure compound at a high reaction pressure.

22. A method of Claim 21 including, in said first reaction cycle, pressurizing a third portion of said reactors at a third pressure whereby said compound therein adsorbs said gaseous reactant in an exothermic reaction, said second and third pressures being different from one another and less than said first pressure.

23. A method of Claim 22 including in said second reaction cycle, operating said third portion of said reactors at a temperature resulting in said first or second pressure whereby said compound therein desorbs said gaseous reactant in an endothermic reaction.

24. The method of Claims 19 or 23 including recovering heat and/or providing cooling from said adsorbing/desorbing apparatus.

25. The method of Claim 1 in which said receiving apparatus comprises a mechanical compressor (100), said method further comprising directing desorbed gaseous reactant from desorbing reactors to an inlet side of said mechanical compressor, and directing gaseous reactant from an outlet side of said mechanical compressor to adsorbing reactors.

26. The method of Claim 25 comprising selecting said plurality of compounds such that each of said compounds adsorb and desorb the same gaseous reactant at different temperatures, respectively, at said reaction pressures.

27. The method of Claim 26 further comprising introducing said compounds into successive reactors in successive ascending order of adsorption temperature at the same adsorption pressure.

28. The method of Claim 27 wherein said compounds are selected such that the adsorption temperature of a compound, at adsorption pressure, is higher than the desorption temperature of the next lower vapor pressure compound, at desorption pressure.

29. A method of Claim 27 including, in said first reaction cycle, pressurizing a third portion of said reactors at a third pressure whereby said compound therein adsorbs said gaseous reactant in an exothermic reaction, said second and third pressures being different from one another and greater than said first pressure.

30. A method of Claim 29 including, in said second reaction cycle, pressurizing said third portion of said reactors at said first or second pressure whereby said compound therein desorbs said gaseous reactant in an endothermic reaction.

31. A heat pump apparatus utilising solid-vapor compound reactions comprising
        a plurality of three or more reaction chambers (12, 14, 16) each of said chambers having a different complex compound therein comprising a solid reactant adsorbent and a gaseous reactant adsorbed thereon, each of said complex compounds having a different gaseous reactant vapor pressure, substantially independent of the concentration of the gaseous reactant therein,
        said complex compounds having an ascending order of gaseous reactant vapor pressure with the adsorption temperature of a lower vapor pressure compound at a low reaction pressure being higher than the desorption temperature of the next successive higher vapor pressure compound at a high reaction pressure,

wherein said gaseous reactant comprises ammonia, water, carbon dioxide, sulfur dioxide, a lower alkanol, lower alkane, an alkyamine, a polyamine or phosphine and said solid reactant adsorbent comprises an inorganic salt comprising a metal oxide, halide, carbonate, oxalate, nitrate, nitrite, sulfite and sulfate, wherein said metal comprises alkali metal, alkaline earth metal, transition metal, aluminum, zinc, cadmium, or tin,

or said salt comprises a double metal chloride of metals selected from an alkali metal, alkaline earth metal, aluminum, manganese, iron, nickel or cobalt, and

means for directing heat from an adsorption reaction chamber to a desorption reaction chamber.

32. Apparatus of Claim 31 including means for directing heat between reaction chambers and external heat exchange means.

33. Apparatus of claims 31 or 32 including receiving means for receiving and discharging gaseous reactant from and to said plurality of reactors, said receiving means comprising (a) a condenser (26) and an evaporator (24), (b) adsorbing-desorbing means (55, 57), or (c) a mechanical compressor (100), and including means for directing gaseous reactant between said receiving means and said reactors.

34. Apparatus of Claim 33 wherein said receiving means comprises a condenser (26) and an evaporator (24) and said apparatus further comprises means for recovering heat from said condenser and/or providing cooling from said evaporator.

35. Apparatus of Claim 33 wherein said receiving means comprises adsorbing-desorbing means comprising two or more reactors (55, 57) containing a complex compound, an inorganic salt adsorbent, or a liquid adsorbent composition.

36. Apparatus of Claim 33 wherein said receiving means comprises a mechanical compressor (100).

37. A method of operating a mechanical or pressure driven heat pump or refrigeration system comprising:

selecting a plurality of two or more different compounds comprising a solid reactant adsorbent and a gaseous reactant adsorbed thereon, wherein each of said complex compounds has a different gaseous reactant vapor pressure, substantially independent of the concentration of the gaseous reactant,

locating a different one of said compounds in a different one of a plurality of reactors (104, 105),

in a first reaction cycle, pressurizing a first portion of said reactors at a first pressure, whereby said compound therein desorbs said gaseous reactant at said first pressure in an endothermic reaction directing said desorbed gaseous reactant to a compressor, and pressurising said second portion of said reactors at a second pressure, higher than said first pressure with gaseous reactant from said compressor, whereby said compound therein adsorbs said gaseous reactant at said second pressure in an exothermic reaction,

in a second reaction cycle, pressurising said first portion of said reactors at said second pressure whereby said compound therein adsorbs said gaseous reactant at said second pressure in an exothermic reaction, and pressurising said second portion of said reactors at said first pressure whereby said compounds therein desorb said gaseous reactant at said first pressure in an endothermic reaction and directing said desorbed gaseous reactant to said compressor, and

directing the heat transfer fluid between said reactors in successive ascending order of the respective vapour pressure of the different compounds whereby at least a portion of the heat released from said exothermic adsorption reaction is directed to a reactor for heating compounds therein for driving an endothermic desorption reaction.

38. The method of Claim 37 comprising selecting said plurality of compounds such that each of said compounds adsorb and desorb the same gaseous reactant at different temperatures, respectively, at said reaction pressures.

39. The method Claim 38 comprising introducing said compounds into successive reactors in successive ascending order of adsorption temperature at the same adsorption pressure.

40. The method of Claim 39 wherein said compounds are selected such that the adsorption temperature of a compound, at adsorption pressure, is higher than the desorption temperature of the next lower vapor pressure compound, at desorption pressure.

**41.** A method of Claim 37 including, in said first reaction cycle, pressurizing a third portion of said reactors at a third pressure whereby said compound therein adsorbs said gaseous reactant in an exothermic reaction, said second and third pressures being different from one another and greater than said first pressure.

**42.** A method of Claim 41 including, in said second reaction cycle, pressurizing said third portion of said reactors at said first or second pressure whereby said compound therein desorbs said gaseous reactant in an endothermic reaction.

**43.** A mechanical or pressure actuated heat pump apparatus comprising

a plurality of two or more reaction chambers (104, 105) each of said chambers having a different compound therein comprising a solid reactant adsorbent and a gaseous reactant adsorbed thereon, each of said compounds having a different gaseous reactant vapor pressure, substantially independent of the concentration of the gaseous reactant therein,

said compounds having an ascending order of adsorption temperatures at the same adsorption and desorption pressure, respectively, and wherein the lower adsorption temperature compound adsorption temperature at high reaction pressure is higher than the desorption temperature of the next successive higher adsorption temperature compound at low reaction pressure,

wherein said compounds comprise a gaseous reactant selected from the group consisting of ammonia, water, carbon dioxide, sulfur dioxide, a lower alkanol, an alkyamine, a polyamine and phosphine and a solid inorganic salt selected from the group consisting of a metal oxide, halide, carbonate, oxalate, nitrate, nitrite, sulfite and sulfate, wherein said metal is selected from the group consisting of an alkali metal, alkaline earth metal, transition metal, aluminum, zinc, cadmium and tin, or a solid salt comprising double metal chloride of metals selected from the group consisting of an alkali metal, alkaline earth metal, aluminum, manganese, iron, nickel, cobalt, and

means for directing heat from a high pressure adsorbing compound/reactor to a low pressure desorbing compound/reactor, and

a mechanical compressor (100), conduit means (113, 114) and valve means (101) co-operating therewith for directing said gaseous reactant to and from said plurality of reaction chambers from and to said mechanical compressor.

**44.** Apparatus of Claim 43 including means for directing heat between reaction chambers and external heat exchange means.

## Patentansprüche

**1.** Verfahren zum Betreiben einer Wärmepumpe unter Verwendung von Feststoff-Gas-Verbundreaktionen in einem Reaktorsystem;
- mit einer Mehrzahl von drei oder mehr Reaktoren (12, 14, 16), wobei jeder Reaktor eine andere Verbindung mit einem adsorbierenden Feststoffreaktionsteilnehmer und einem daran adsorbierten gasförmigen Reaktionsteilnehmer enthält, wobei jede der Verbindungen einen unterschiedlichen Gasreaktionsdampfdruck hat, der im wesentlichen unabhängig von der Konzentration des gasförmigen Reaktionsteilnehmers ist,
- mit Mitteln zum Erwärmen der Reaktoren, mit Einrichtungen zum Leiten von Wärmeübertragungsfluiden zu und weg von jedem Reaktor, und
- mit einer Aufnahmevorrichtung zum Aufnehmen und Entladen des gasförmigen Reaktionsteilnehmers von und zu der Vielzahl von Reaktoren, mit (a) einem Kondensator (26) und einem Verdampfer (24), die beide betriebsmäßig mit der Vielzahl von Reaktoren kommunizieren, mit (b) einer Adsorbier-Desorbiervorrichtung (55, 57) oder (c) einem mechanischen Verdichter (100) und mit einer Einrichtung zum Leiten eines gasförmigen Reaktionsteilnehmers zwischen der Aufnahmeeinrichtung und den Reaktoren,
  wobei das Verfahren folgende Schritte aufweist:
- in einem ersten Reaktionszyklus Betreiben einer ersten Gruppe der Reaktoren bei einer Temperatur, die zu einem ersten Druck führt, wodurch die darin befindliche Verbindung den gasförmigen Reaktionsteilnehmer in einer endothermen Reaktion desorbiert, und Betreiben der zweiten Gruppe der Reaktoren bei einem zweiten Druck, wodurch die darin befindliche Verbindung den gasförmigen Reaktionsteilnehmer in einer exothermen Reaktion adsorbiert, und

- in einem zweiten Reaktionszyklus Betreiben der ersten Gruppe der Reaktoren bei dem zweiten Druck, wodurch die darin befindliche Verbindung den gasförmigen Reaktionsteilnehmer in einer exothermen Reaktion adsorbiert, und Betreiben der zweiten Gruppe der Reaktoren bei einer Temperatur, die zu dem ersten Druck führt, wodurch die darin befindliche Verbindung den gasförmigen Reaktionsteilnehmer in einer endothermen Reaktion desorbiert, und
- Leiten des Wärmeübertragungsfluides zwischen den Reaktoren in nach und nach ansteigender Reihe der entsprechenden Dampfdrücke der verschiedenen Verbindungen, wodurch wenigstens ein aus einer exothermen Adsorptionsreaktion wiedergewonnener Teil der Wärme zu einem Reaktor geleitet wird, um eine darin befindliche Verbindung zu erwärmen, um eine endotherme Desorptionsreaktion zu betreiben,
- wobei das Verfahren weiterhin die Schritte enthält, während des ersten Reaktionszyklus den gasförmigen Reaktionsteilnehmer aus der ersten Gruppe der Reaktoren zu der Aufnahmevorrichtung zu leiten und einen gasförmigen Reaktionsteilnehmer von der Aufnahmevorrichtung zu der zweiten Gruppe der Reaktoren zu führen und während des zweiten Reaktionszyklus den gasförmigen Reaktionsteilnehmer von der zweiten Gruppe der Reaktoren zu der Aufnahmevorrichtung zu leiten und den gasförmigen Reaktionsteilnehmer von der Aufnahmevorrichtung zu leiten.

2. Verfahren nach Anspruch 1, bei dem die Aufnahmevorrichtung einen Kondensator (26) und einen Verdampfer (24) aufweist, wobei das Verfahren die Schritte aufweist: Leiten eines desorbierten gasförmigen Reaktionsteilnehmers von desorbierenden Reaktoren zu dem Kondensator, Leiten eines gasförmigen Reaktionsteilnehmers von dem Kondensator zu dem Verdampfer, und Leiten eines gasförmigen Reaktionsteilnehmers von dem Verdampfer zu Adsorbierreaktoren.

3. Verfahren nach Anspruch 2, wobei Wärme aus einer Kondensation gasförmiger Reaktionsteilnehmer in dem Kondensator wiedergewonnen wird.

4. Verfahren nach Anspruch 2, wobei Kühlung des bei der Verdampfung in dem Verdampfer kondensierten gasförmigen Reaktionsteilnehmers vorgesehen wird.

5. Verfahren nach Anspruch 1, wobei äußere Wärme zu einem ersten Reaktor der ersten Gruppe von Reaktoren im ersten Zyklus zum Betreiben einer darin ablaufenden endothermen Reaktion geleitet wird.

6. Verfahren nach Anspruch 1, wobei wenigstens ein Teil der Wärme, die während der exothermen Reaktionen frei wird, oder wenigstens ein Teil der Wärme, die während der endothermen Reaktionen adsorbiert wird, zu Wärmetauschervorrichtungen zur Energierückgewinnung geleitet werden.

7. Verfahren nach Anspruch 1 oder 2, wobei der gasförmige Reaktionsteilnehmer Ammoniak, Wasser, Wasserstoff, Kohlendioxid, Schwefeldioxid, niederes Alkanol, Alkylamin, Polyamin oder Phosphin aufweist.

8. Verfahren nach Anspruch 7, wobei der Feststoffreaktionsteilnehmer Metalloxid, Hydrid, Halogenid, Karbonat, Nitrat, Nitrit, Sulfat, Oxalat oder Sulfid ist.

9. Verfahren nach Anspruch 8, wobei das Metall des Feststoffreaktionsteilnehmers ein Alkalimetall, Erdalkalimetall, ein Übergangsmetall, Aluminium, Zink, Kadmium oder Zinn enthält.

10. Verfahren nach Anspruch 8, wobei der Feststoffreaktionsteilnehmer ein Doppelmetallchlorid enthält, wobei die Metalle ausgewählt sind aus Alkalimetall, Erdalkalimetall, Aluminium, Mangan, Eisen, Nickel oder Kobalt.

11. Verfahren nach Anspruch 9, wobei der gasförmige Reaktionsteilnehmer Ammoniak ist und der Feststoffreaktionsteilnehmer ein Halogenid dieses Metalls ist.

12. Verfahren nach Anspruch 1, 7, 8 oder 9, wobei die Verbindungen den gleichen gasförmigen Reaktionsteilnehmer bei unterschiedlichen Temperaturen bei den genannten Reaktionsdrücken adsorbieren und desorbieren, und wobei die verschiedenen Verbindungen in aufeinanderfolgenden Reaktoren in aufeinanderfolgender steigender Ordnung des Dampfdruckes des gasförmigen Reaktionsteilnehmers angeordnet sind.

13. Verfahren nach Anspruch 12, wobei die verschiedenen Verbindungen so ausgewählt sind, daß die Adsorptionstemperatur einer Verbindung mit niedrigerem Dampfdruck bei einem niedrigen Reaktionsdruck höher ist als die Desorptionstemperatur einer folgenden Verbindung mit höherem Dampfdruck bei hohem Reaktionsdruck.

14. Verfahren nach Anspruch 13, wobei der erste Druck höher ist als der zweite Druck.

15. Verfahren nach Anspruch 14, wobei wenigstens ein Teil der Wärme aus einer exothermen Adsorptionsreaktion einer ersten der Verbindungen, die einen niedrigeren Dampfdruck als eine zweite der Verbindungen hat, zu einem Reaktor geleitet wird, der eine Verbindung enthält, die den nächst höheren Dampfdruck hat zum Betreiben einer endothermen Desorptionsreaktion derselben.

16. Verfahren nach Anspruch 12, wobei im ersten Reaktionszyklus eine dritte Gruppe der Reaktoren bei einem dritten Druck unter Druck gesetzt wird, wodurch die darin befindliche Verbindung den gasförmigen Reaktionsteilnehmer in einer exothermen Reaktion adsorbiert, wobei die zweiten und dritten Drücke sich voneinander unterscheiden und niedriger als der erste Druck sind.

17. Verfahren nach Anspruch 16, wobei im zweiten Reaktionszyklus die dritte Gruppe der Reaktoren bei einer Temperatur betrieben wird, die zu dem ersten oder zweiten Druck führt, wodurch die darin befindliche Verbindung den gasförmigen Reaktionsteilnehmer in einer endothermen Reaktion desorbiert.

18. Verfahren nach Anspruch 1, bei dem die Aufnahmevorrichtung Adsorptions- und Desorptionsvorrichtungen (55, 57) aufweist, wobei das Verfahren die Schritte Leiten eines desorbierten gasförmigen Reaktionsteilnehmers von Desorptionsreaktoren zu den Adsorptions-Desorptionsvorrichtungen enthält und Leiten eines gasförmigen Reaktionsteilnehmers von den Adsorptions-Desorptionsvorrichtungen zu absorbierenden Reaktoren aufweist.

19. Verfahren nach Anspruch 18, wobei der gasförmige Reaktionsteilnehmer Ammoniak, Wasser, Kohlendioxid, Schwefeldioxid, niederes Alkanol, Alkylamin, Polyamin oder Phosphin aufweist, und wobei der Feststoffreaktionsteilnehmer ein Metalloxid, Halogenid, Karbonat, Nitrat, Nitrit, Sulfat, Oxalat oder Sulfid eines Alkalimetalls, Erdalkalimetalls, Übergangsmetalls, von Aluminium, Zink, Kadmium oder Zinn oder ein Doppelmetallchlorid aus Metallen ist, die ausgewählt sind aus einem Alkalimetall, einem Erdalkalimetall, Aluminium, Mangan, Eisen, Nickel oder Kobalt.

20. Verfahren nach Anspruch 19, wobei die Mehrzahl von Verbindungen so ausgewählt wird, daß jede der Verbindungen denselben gasförmigen Reaktionsteilnehmer bei unterschiedlichen Temperaturen bei den genannten entsprechenden Reaktionsdrücken adsorbiert und desorbiert.

21. Verfahren nach Anspruch 20, wobei die genannten Verbindungen derart ausgewählt werden, daß die Adsorptionstemperatur einer Verbindung mit niedrigerem Dampfdruck bei einem niedrigen Reaktionsdruck höher ist als die Desorptionstemperatur der Verbindung mit dem nächstfolgenden höheren Dampfdruck bei einem hohen Reaktionsdruck.

22. Verfahren nach Anspruch 21, wobei in einem ersten Reaktionszyklus eine dritte Gruppe der Reaktoren bei einem dritten Druck unter Druck gesetzt wird, wodurch die darin befindliche Verbindung den gasförmigen Reaktionsteilnehmer in einer exothermen Reaktion adsorbiert, wobei die zweiten und dritten Drücke sich voneinander unterscheiden und niedriger als der erste Druck sind.

23. Verfahren nach Anspruch 22, wobei in dem zweiten Reaktionszyklus die dritte Gruppe der Reaktoren bei einer Temperatur betrieben wird, die zu dem ersten oder zweiten Druck führt, wodurch die darin befindliche Verbindung den gasförmigen Reaktionsteilnehmer in einer endothermen Reaktion desorbiert.

24. Verfahren nach den Ansprüchen 19 oder 23, wobei Wärme wiedergewonnen wird und/oder Kühlung aus der Adsorbier/Desorbiervorrichtung erzeugt wird.

25. Verfahren nach Anspruch 1, bei dem die Aufnahmevorrichtung einen mechanischen Verdichter (100) aufweist, wobei das Verfahren außerdem die Schritte aufweist: Leiten eines desorbierten gasförmigen Reaktionsteilnehmers von Desorptionsreaktoren zu einer Einlaufseite des mechanischen Verdichters und Leiten eines gasförmigen Reaktionsteilnehmers von einer Auslaßseite des mechanischen Verdichters zu Adsorptionsreaktoren.

26. Verfahren nach Anspruch 25, wobei die Mehrzahl der Verbindungen so ausgewählt wird, daß jede der Verbindungen den gleichen gasförmigen Reaktionsteilnehmer bei unterschiedlichen Temperaturen bei den entsprechenden Reaktionsdrücken adsorbiert und desorbiert.

27. Verfahren nach Anspruch 26, wobei die Verbindungen in aufeinanderfolgende Reaktoren in aufeinanderfolgender aufsteigender Ordnung der Adsorptionstemperatur bei dem gleichen Adsorptionsdruck eingeführt werden.

28. Verfahren nach Anspruch 27, wobei die Verbindungen so ausgewählt werden, daß die Adsorptionstemperatur einer Verbindung bei Adsorptionsdruck höher ist als die Desorptionstemperatur der Verbindung mit dem nächst niedrigeren Dampfdruck bei Desorptionsdruck.

29. Verfahren nach Anspruch 27, wobei in dem ersten Reaktionszyklus eine dritte Gruppe der Reaktoren bei einem dritten Druck unter Druck gesetzt wird, wodurch die darin befindliche Verbindung den gasförmigen Reaktionsteilnehmer in einer exothermen Reaktion adsorbiert, wobei die zweiten und dritten Drücke sich voneinander unterscheiden und größer als der erste Druck sind.

30. Verfahren nach Anspruch 29, wobei in dem zweiten Reaktionszyklus die dritte Gruppe der Reaktoren bei dem ersten oder zweiten Druck unter Druck gesetzt wird, wodurch die darin befindliche Verbindung den gasförmigen Reaktionsteilnehmer in einer endothermen Reaktion desorbiert.

31. Wärmepumpenvorrichtung, die Feststoff-Dampf-Verbindungsreaktionen nutzt,
- mit einer Mehrzahl von drei oder mehr Reaktionskammern (12, 14, 16), wobei jede der Kammern in sich eine andere komplexe Verbindung mit einem adsorbierenden Feststoffreaktionsteilnehmer und einem daran adsorbierten gasförmigen Reaktionsteilnehmer enthält, wobei jede der komplexen Verbindungen einen anderen Dampfdruck des gasförmigen Reaktionsteilnehmers hat, der im wesentlichen unabhängig von der Konzentration des darin befindlichen gasförmigen Reaktionsteilnehmers ist,
- wobei die komplexen Verbindungen eine ansteigende Reihe des Dampfdrucks des gasförmigen Reaktionsteilnehmers haben, wobei die Adsorptionstemperatur einer Verbindung mit niedrigerem Dampfdruck bei einem niedrigen Reaktionsdruck höher ist als die Desorptionstemperatur der Verbindung mit dem nächstfolgenden höheren Dampfdruck bei einem hohen Reaktionsdruck,
- wobei der gasförmige Reaktionsteilnehmer Ammoniak, Wasser, Kohlendioxid, Schwefeldioxid, ein niederes Alkanol, niederes Alkan, ein Alkylamin, ein Polyamin oder Phosphin aufweist und der adsorbierende Feststoffreaktionsteilnehmer ein anorganisches Salz enthält, das ein Metalloxid, Halogenid, Karbonat, Oxalat, Nitrat, Nitrit, Sulfit und Sulfat enthält, wobei das Metall Alkalimetall, Erdalkalimetall, Übergangsmetall, Aluminium, Zink, Cadmium oder Zinn enthält,
- oder wobei das Salz ein Doppelmetallchlorid von Metallen, die aus Alkalimetall, Erdalkalimetall, Aluminium, Mangan, Eisen, Nickel oder Kobalt ausgewählt sind, enthält und
- mit Mitteln zum Leiten von Wärme von einer Adsorptionsreaktionskammer zu einer Desorptionsreaktionskammer.

32. Vorrichtung nach Anspruch 31, mit Mitteln zum Leiten von Wärme zwischen Reaktionskammern und äußeren Wärmetauschereinrichtungen.

33. Vorrichtung nach Anspruch 31 oder 32, mit einer Aufnahmeeinrichtung zum Aufnehmen und Entladen eines gasförmigen Reaktionsteilnehmers aus der und an die Mehrzahl der Reaktoren, wobei die Aufnahmeeinrichtung (a) einen Kondensator (26) und einen Verdampfer (24), (b) eine Adsorptions-Desorptionsvorrichtung (55, 57) oder (c) einen mechanischen Verdichter (100) aufweist, und Mittel zum Leiten eines gasförmigen Reaktionsteilnehmers zwischen der Aufnahmeeinrichtung und den Reaktoren aufweist.

34. Vorrichtung nach Anspruch 33, wobei die Aufnahmeeinrichtung einen Kondensator (26) und einen Verdampfer (24) aufweist, und wobei die Vorrichtung außerdem Mittel zum Wiedergewinnen von Wärme von dem Kondensator und/oder Erzeugen von Kühlung von dem Verdampfer aufweist.

35. Vorrichtung nach Anspruch 33, wobei die Aufnahmeeinrichtung eine Adsorptions-Desorptionsvorrichtung aufweist, die zwei oder mehr Reaktoren (55, 57) aufweist, die eine komplexe Verbindung, ein adsorbierendes anorganisches Salz oder eine flüssige adsorbierende Mischung enthalten.

**36.** Vorrichtung nach Anspruch 33, wobei die Aufnahmeeinrichtung einen mechanischen Verdichter (100) aufweist.

**37.** Verfahren zum Betreiben einer(s) mechanisch oder mit Druck betriebenen Wärmepumpe oder Kühlsystems mit folgenden Schritten:
- Auswählen einer Mehrzahl von zwei oder mehr unterschiedlichen Verbindungen, die einen adsorbierenden Feststoffreaktionsteilnehmer und einen daran adsorbierten gasförmigen Reaktionsteilnehmer aufweisen, wobei jede der komplexen Verbindungen einen unterschiedlichen Dampfdruck des gasförmigen Reaktionsteilnehmers hat, der im wesentlichen unabhängig von der Konzentration des gasförmigen Reaktionsteilnehmers ist,
- Einbringen einer anderen der genannten Verbindungen in einen anderen einer Mehrzahl von Reaktoren (104, 105),
- in einem ersten Reaktionszyklus Unterdrucksetzen einer ersten Gruppe der Reaktoren bei einem ersten Druck, wodurch die darin befindliche Verbindung den gasförmigen Reaktionsteilnehmer bei dem ersten Druck in einer endothermen Reaktion desorbiert,
- Leiten des desorbierten gasförmigen Reaktionsteilnehmers zu einem Verdichter und Unterdrucksetzen der zweiten Gruppe der Reaktoren bei einem zweiten Druck, der höher als der erste Druck des gasförmigen Reaktionsteilnehmers des Verdichters ist, wodurch die darin befindliche Verbindung den gasförmigen Reaktionsteilnehmer bei dem zweiten Druck in einer exothermen Reaktion adsorbiert,
- in einem zweiten Reaktionszyklus Unterdrucksetzen der ersten Gruppe der Reaktoren bei dem zweiten Druck, wodurch die darin befindliche Verbindung den gasförmigen Reaktionsteilnehmer bei dem zweiten Druck in einer exothermen Reaktion adsorbiert, und Unterdrucksetzen der zweiten Gruppe der Reaktoren bei dem ersten Druck, wodurch die darin befindlichen Verbindungen den gasförmigen Reaktionsteilnehmer bei dem ersten Druck in einer endothermen Reaktion desorbieren, und Leiten des desorbierten gasförmigen Reaktionsteilnehmers zu dem Verdichter und
- Leiten des Wärmeübertragungsfluides zwischen den Reaktoren in aufeinanderfolgend aufsteigender Reihe des entsprechenden Dampfdruckes der verschiedenen Verbindungen, wodurch wenigstens ein Teil der bei der genannten exothermen Adsorptionsreaktion freiwerdenden Wärme zu einem Reaktor geleitet wird, um darin befindliche Verbindungen zum Betreiben einer endothermen Desorptionsreaktion zu erwärmen.

**38.** Verfahren nach Anspruch 37, wobei die Mehrzahl von Verbindungen derart ausgewählt wird, daß jede der Verbindungen denselben gasförmigen Reaktionsteilnehmer bei unterschiedlichen Temperaturen bei den genannten Reaktionsdrücken ad- und desorbiert.

**39.** Verfahren nach Anspruch 38, wobei die genannten Verbindungen in aufeinanderfolgende Reaktoren in sukzessiv ansteigender Reihe der Adsorptionstemperaturen bei dem gleichen Adsorptionsdruck eingeführt werden.

**40.** Verfahren nach Anspruch 39, wobei die Verbindungen so ausgewählt werden, daß die Adsorptionstemperatur einer Verbindung bei Adsorptionsdruck höher ist als die Desorptionstemperatur der Verbindung mit dem nächst niedrigeren Dampfdruck bei Desorptionsdruck.

**41.** Verfahren nach Anspruch 37, wobei in dem ersten Reaktionszyklus eine dritte Gruppe der Reaktoren bei einem dritten Druck unter Druck gesetzt wird, wodurch die darin befindliche Verbindung den gasförmigen Reaktionsteilnehmer in einer exothermen Reaktion adsorbiert, wobei die zweiten und dritten Drücke sich voneinander unterscheiden und größer als der erste Druck sind.

**42.** Verfahren nach Anspruch 41, wobei im zweiten Reaktionszyklus die dritte Gruppe der Reaktoren bei dem ersten oder zweiten Druck unter Druck gesetzt wird, wodurch die darin befindliche Verbindung den gasförmigen Reaktionsteilnehmer in einer endothermen Reaktion desorbiert.

**43.** Mechanische oder druckbetriebene Wärmepumpenvorrichtung
- mit einer Mehrzahl von zwei oder mehr Reaktionskammern (104, 105), wobei jede der Kammern in sich eine andere Verbindung enthält, mit einem adsorbierenden Feststoffreaktionsteilnehmer und einem daran adsorbierten gasförmigen Reaktionsteilnehmer, wobei jede der Verbindungen einen unterschiedlichen Dampfdruck des gasförmigen Reaktionsmittels hat, der im wesentlichen unabhängig von der Konzentration des darin befindlichen gasförmigen Reaktionsteilnehmers ist,

- wobei die Verbindungen eine aufsteigende Reihe von Adsorptionstemperaturen bei gleichem Adsorptions- und Desorptionsdruck haben, und wobei die Adsorptionstemperatur der niederen Adsorptionstemperaturverbindung bei hohem Reaktionsdruck höher ist als die Desorptionstemperatur der nächsten sukzessiv höheren Adsorptionstemperaturverbindung bei niedrigem Reaktionsdruck,

- wobei die Verbindungen einen gasförmigen Reaktionsteilnehmer enthalten, der aus der Gruppe ausgewählt ist, die aus Ammoniak, Wasser, Kohlendioxid, Schwefeldioxid, einem niedrigeren Alkanol, einem Alkylamin, einem Polyamin und Phosphin und einem festen anorganischen Salz besteht, das aus der Gruppe ausgewählt ist, die aus Metalloxid, Halogenid, Karbonat, Oxalat, Nitrat, Nitrit, Sulfit und Sulfat besteht, ausgewählt ist, wobei das Metall aus der Gruppe ausgewählt ist, die aus Alkalimetall, Erdalkalimetall, Übergangsmetall, Aluminium, Zink, Cadmium und Zinn, oder einem Feststoffsalz besteht, das ein Doppelmetallchlorid von Metallen enthält, die aus der Gruppe ausgewählt sind, die aus Alkalimetall, Erdalkalimetall, Aluminium, Mangan, Eisen, Nickel, Kobalt besteht, und

- Mittel zum Leiten von Wärme von einer/einem Hochdruck-Adsorptionsverbindung/-reaktor zu einer(m) Niedrigdruck-Desorptionsverbindung/-reaktor und

- mit einem mechanischen Verdichter (100), einer Führungseinrichtung (113, 114) und einer Ventileinrichtung (101), die damit zusammenarbeiten, um den genannten gasförmigen Reaktionsteilnehmer zu und von der Mehrzahl von Reaktionskammern zu und von dem mechanischen Verdichter zu leiten.

**44.** Vorrichtung nach Anspruch 43, mit Mitteln zum Leiten von Wärme zwischen Reaktionskammern und außenliegenden Wärmetauschereinrichtungen.


## Revendications

1. Procédé de fonctionnement d'une pompe à chaleur utilisant des réactions de composés solide-vapeur dans un dispositif de réacteurs comportant :

une pluralité de trois réacteurs ou plus (12, 14, 16), chaque réacteur contenant un composé différent comprenant un réactif solide adsorbant et un réactif gazeux adsorbé sur celui-ci, où chacun desdits composés a une pression de vapeur du réactif gazeux différente, sensiblement indépendante de la concentration du réactif gazeux,

des moyens pour chauffer lesdits réacteurs, comprenant des moyens pour transférer des fluides caloporteurs à destination et en provenance des réacteurs, et

un dispositif récepteur pour recevoir et délivrer du réactif gazeux en provenance et à destination de ladite pluralité de réacteurs, comprenant (a) un condenseur (26) et un évaporateur (24), pourvus chacun d'une communication fonctionnelle avec ladite pluralité de réacteurs, (b) un dispositif d'adsorption-désorption (55, 57) ou (c) un compresseur mécanique (100), et comprenant des moyens pour transférer du réactif gazeux entre les moyens récepteurs et les réacteurs,

le procédé comprenant des opérations dans lesquelles :

dans un premier cycle de réactions, on fait fonctionner une première partie des réacteurs à une température ayant pour résultat une première pression, de sorte que le composé s'y trouvant désorbe le réactif gazeux dans une réaction endothermique, et l'on fait fonctionner la seconde partie des réacteurs à une seconde pression, de sorte que le composé s'y trouvant adsorbe le réactif gazeux dans une réaction exothermique, et

dans un second cycle de réactions, on fait fonctionner ladite première partie des réacteurs à ladite seconde pression, de sorte que le composé s'y trouvant adsorbe le réactif gazeux dans une réaction exothermique, et l'on fait fonctionner ladite seconde partie des réacteurs à une température ayant pour résultat ladite première pression, de sorte que le composé s'y trouvant désorbe le réactif gazeux dans une réaction endothermique, et

on transfère le fluide caloporteur entre lesdits réacteurs dans un ordre successif croissant des pressions de vapeur respectives des différents composés, de sorte qu'au moins une partie de la chaleur recueillie d'une réaction d'adsorption exothermique est transférée à un réacteur pour chauffer un composé s'y trouvant afin d'entraîner une réaction de désorption endothermique,

le procédé comprenant en outre des opérations dans lesquelles, pendant le premier cycle de réactions, on transfère du réactif gazeux de ladite première partie des réacteurs au dispositif récepteur, et l'on transfère du réactif gazeux du dispositif récepteur à ladite seconde partie des réacteurs et, pendant le second cycle de réactions, on transfère du réactif gazeux de ladite première partie des réacteurs au dispositif récepteur et l'on transfère du réactif gazeux à partir du dispositif récepteur.

2. Procédé selon la revendication 1, dans lequel le dispositif récepteur comporte un condenseur (26) et un évaporateur (24), le procédé comportant en outre des opérations où l'on transfère du réactif gazeux désorbé des réacteurs en désorption au condenseur, on transfère du réactif gazeux du condenseur à l'évaporateur, et l'on transfère du réactif gazeux de 1' évaporateur aux réacteurs en adsorption.

3. Procédé selon la revendication 2, dans lequel on récupère de la chaleur de condensation du réactif gazeux dans le condenseur.

4. Procédé selon la revendication 2, dans lequel on produit un refroidissement par évaporation du réactif gazeux condensé dans l'évaporateur.

5. Procédé selon la revendication 1, dans lequel de la chaleur extérieure est transférée à un premier réacteur de ladite première partie des réacteurs dans le premier cycle, pour y entraîner une réaction endothermique.

6. Procédé selon la revendication 1, dans lequel on transfère au moins une partie de la chaleur libérée au cours des réactions exothermiques, ou au moins une partie de la chaleur absorbée au cours des réactions endothermiques, pour chauffer des moyens d'échange destinés à la récupération d'énergie.

7. Procédé selon la revendication 1 ou 2, dans lequel le réactif gazeux comprend l'ammoniac, l'eau, l'hydrogène, le dioxyde de carbone, le dioxyde de soufre, un alcanol inférieur, une alcoylamine, une polyamine ou une phosphine.

8. Procédé selon la revendication 7, dans lequel le réactif solide est un oxyde, hydrure, halogénure, carbonate, nitrate, nitrite, sulfate, oxalate ou sulfure d'un métal.

9. Procédé selon la revendication 8, dans lequel le métal du réactif solide comprend un métal alcalin, un métal alcalino-terreux, un métal de transition, l'aluminium, le zinc, le cadmium ou l'étain.

10. Procédé selon la revendication 8, dans lequel le réactif solide comprend un chlorure métallique double, les métaux étant choisis parmi un métal alcalin, un métal alcalino-terreux, l'aluminium, le manganèse, le fer, le nickel ou le cobalt.

11. Procédé selon la revendication 9, dans lequel le réactif gazeux est l'ammoniac et le réactif solide est un halogénure dudit métal.

12. Procédé selon la revendication 1, 7, 8 ou 9, dans lequel lesdits composés adsorbent et désorbent le même réactif gazeux à des températures respectives différentes auxdites pressions de réaction, et dans lequel les différents composés sont placés dans des réacteurs successifs dans un ordre successif croissant des pressions de vapeur du réactif gazeux.

13. Procédé selon la revendication 12, dans lequel les différents composés sont choisis de telle façon que la température d'adsorption d'un composé à pression de vapeur plus basse à une basse pression de réaction soit plus élevée que la température de désorption d'un composé suivant à pression de vapeur plus élevée à une haute pression de réaction.

14. Procédé selon la revendication 13, dans lequel ladite première pression est plus élevée que ladite seconde pression.

15. Procédé selon la revendication 14, dans lequel au moins une partie de la chaleur issue d'une réaction d'adsorption exothermique d'un premier des composés, ayant une pression de vapeur inférieure à celle d'un second des composés, est transférée à un réacteur contenant un composé ayant la pression de vapeur immédiatement supérieure, pour entraîner une réaction de désorption endothermique de celui-ci.

16. Procédé selon la revendication 12, dans lequel, dans le premier cycle de réactions, on pressurise une troisième partie des réacteurs à une troisième pression, de sorte que le composé s'y trouvant adsorbe le réactif gazeux dans une réaction exothermique, la seconde et la troisième pression étant différentes l'une de l'autre et inférieures à la première pression.

17. Procédé selon la revendication 16, dans lequel, dans le second cycle de réactions, on fait fonctionner ladite troisième partie des réacteurs à une température ayant pour résultat la première ou la seconde pression, de sorte que le composé s'y trouvant désorbe le réactif gazeux dans une réaction endothermique.

18. Procédé selon la revendication 1, dans lequel le dispositif récepteur comporte des moyens d'adsorption et de désorption (55, 57), le procédé comprenant en outre des opérations dans lesquelles on transfère du réactif gazeux désorbé des réacteurs en désorption au dispositif d'adsorption-désorption et l'on transfère du réactif gazeux du dispositif d'adsorption-désorption à des réacteurs en adsorption.

19. Procédé selon la revendication 18, dans lequel le réactif gazeux comprend l'ammoniac, l'eau, l'hydrogène, le dioxyde de carbone, le dioxyde de soufre, un alcanol inférieur, une alcoylamine, une polyamine ou une phosphine, et dans lequel le réactif solide est un oxyde, halogénure, carbonate, nitrate, nitrite, sulfate, oxalate ou sulfure d'un métal alcalin, d'un métal alcalino-terreux, d'un métal de transition, d'aluminium, de zinc, de cadmium ou d'étain, ou un chlorure métallique double, les métaux étant choisis parmi un métal alcalin, un métal alcalino-terreux, l'aluminium, le manganèse, le fer, le nickel ou le cobalt.

20. Procédé selon la revendication 19, dans lequel on choisit ladite pluralité de composés de telle façon que chacun desdits composés adsorbe et désorbe le même réactif gazeux à des températures respectives différentes auxdites pressions de réaction.

21. Procédé selon la revendication 20, dans lequel les composés sont choisis de telle façon que la température d'adsorption d'un composé à pression de vapeur plus basse à une basse pression de réaction soit plus élevée que la température de désorption du prochain composé suivant à pression de vapeur plus élevée à une haute pression de réaction.

22. Procédé selon la revendication 21, dans lequel, dans le premier cycle de réactions, on pressurise une troisième partie des réacteurs à une troisième pression, de sorte que le composé s'y trouvant adsorbe le réactif gazeux dans une réaction exothermique, la seconde et la troisième pression étant différentes l'une de l'autre et inférieures à la première pression.

23. Procédé selon la revendication 22, dans lequel, dans le second cycle de réactions, on fait fonctionner ladite troisième partie des réacteurs à une température ayant pour résultat la première ou la seconde pression, de sorte que le composé s'y trouvant désorbe le réactif gazeux dans une réaction endothermique.

24. Procédé selon la revendication 19 ou 23, dans lequel on récupère de la chaleur et/ou on fournit un refroidissement à partir du dispositif d'adsorption-désorption.

25. Procédé selon la revendication 1, dans lequel le dispositif récepteur comporte un compresseur mécanique (100), le procédé comprenant en outre les opérations où l'on transfère du réactif gazeux désorbé des réacteurs en désorption à un côté d'entrée du compresseur mécanique, et l'on transfère du réactif gazeux d'un côté de sortie du compresseur mécanique aux réacteurs en adsorption.

26. Procédé selon la revendication 25, dans lequel on choisit ladite pluralité de composés de telle manière que chacun des composés adsorbe et désorbe le même réactif gazeux à des températures respectives différentes auxdites pressions de réaction.

27. Procédé selon la revendication 26, dans lequel on introduit lesdits composés dans des réacteurs successifs dans un ordre successif croissant des températures d'adsorption à la même pression d'adsorption.

28. Procédé selon la revendication 27, dans lequel les composés sont choisis de manière que la température d'adsorption d'un composé, à la pression d'adsorption, soit supérieure à la température de désorption du composé ayant la pression de vapeur immédiatement inférieure, à la pression de désorption.

29. Procédé selon la revendication 27, dans lequel, dans le premier cycle de réactions, on pressurise une troisième partie des réacteurs à une troisième pression, de sorte que le composé s'y trouvant adsorbe le réactif gazeux dans une réaction exothermique, la seconde et la troisième pression étant différentes l'une de l'autre et supérieures à la première pression.

30. Procédé selon la revendication 29, dans lequel, dans le second cycle de réactions, on pressurise ladite troisième partie des réacteurs à la première ou la seconde pression, de sorte que le composé s'y trouvant désorbe le réactif gazeux dans une réaction endothermique.

31. Dispositif de pompe à chaleur utilisant des réactions de composés solide-vapeur, comportant :

une pluralité de trois chambres de réaction ou plus (12, 14, 16), chacune desdites chambres contenant un composé complexe différent comprenant un réactif solide adsorbant et un réactif gazeux adsorbé sur celui-ci, chacun desdits composés complexes ayant une pression de vapeur du réactif gazeux différente, sensiblement indépendante de la concentration du réactif gazeux,

lesdits composés complexes ayant un ordre croissant des pressions de vapeur du réactif gazeux, la température d'adsorption d'un composé à pression de vapeur plus basse à une basse pression de réaction étant plus élevée que la température de désorption du prochain composé suivant à pression de vapeur plus élevée à une haute pression de réaction,

dans lequel le réactif gazeux comprend l'ammoniac, l'eau, le dioxyde de carbone, le dioxyde de soufre, un alcanol inférieur, un alcane inférieur, une alcoyamine, une polyamine ou une phosphine, et ledit réactif solide adsorbant comprend un sel inorganique comprenant un oxyde, halogénure, carbonate, oxalate, nitrate, nitrite, sulfite ou sulfate d'un métal, où ledit métal comprend un métal alcalin, un métal alcalino-terreux, un métal de transition, l'aluminium, le zinc, le cadmium ou l'étain,

ou dans lequel ledit sel comprend un chlorure métallique double de métaux choisis parmi un métal alcalin, un métal alcalino-terreux, l'aluminium, le manganèse, le fer, le nickel ou le cobalt, et

des moyens pour transférer de la chaleur d'une chambre de réaction à adsorption à une chambre de réaction à désorption.

32. Dispositif selon la revendication 31, comportant des moyens pour transférer de la chaleur entre des chambres de réaction et des moyens extérieurs d'échange de chaleur.

33. Dispositif selon la revendication 31 ou 32, comportant des moyens récepteurs pour recevoir et délivrer du réactif gazeux de et à ladite pluralité de réacteurs, les moyens récepteurs comportant (a) un condenseur (26) et un évaporateur (24), (b) des moyens d'adsorption-désorption (55, 57), ou (c) un compresseur mécanique (100), et comportant des moyens pour transférer du réactif gazeux entre les moyens récepteurs et les réacteurs.

34. Dispositif selon la revendication 33, dans lequel les moyens récepteurs comportent un condenseur (26) et un évaporateur (24) et le dispositif comporte en outre des moyens pour récupérer de la chaleur du condenseur et/ou fournir un refroidissement à partir de l'évaporateur.

35. Dispositif selon la revendication 33, dans lequel les moyens récepteurs comportent des moyens d'adsorption-désorption comprenant deux réacteurs ou plus (55, 57) qui contiennent un composé complexe, un adsorbant à sel inorganique ou une composition à adsorbant liquide.

36. Dispositif selon la revendication 33, dans lequel les moyens récepteurs comportent un compresseur mécanique (100).

37. Procédé de fonctionnement d'une pompe à chaleur ou d'un système de réfrigération, mécanique ou actionné(e) par pression, dans lequel :

on choisit une pluralité de deux ou plusieurs composés différents comprenant un réactif solide adsorbant et un réactif gazeux adsorbé sur celui-ci, où chacun desdits composés complexes a une pression de vapeur du réactif gazeux différente, sensiblement indépendante de la concentration du réactif gazeux,

on place différents de ces composés dans différents réacteurs d'une pluralité de réacteurs (104, 105),

dans un premier cycle de réactions, on pressurise une première partie desdits réacteurs à une première pression, de sorte que le composé s'y trouvant désorbe le réactif gazeux à ladite première pression dans une réaction endothermique, on transfère le réactif gazeux désorbé à un compresseur, et l'on pressurise ladite seconde partie des réacteurs à une seconde pression, supérieure à la première pression, avec le réactif gazeux provenant du compresseur, de sorte que le composé s'y trouvant adsorbe le réactif gazeux à ladite seconde pression dans une réaction exothermique,

dans un second cycle de réactions, on pressurise ladite première partie des réacteurs à ladite seconde pression, de sorte que le composé s'y trouvant adsorbe le réactif gazeux à ladite seconde pression dans une réaction exothermique, et l'on pressurise ladite seconde partie des réacteurs à ladite première pression, de sorte que les composants s'y trouvant désorbent le réactif gazeux à ladite première pression dans une réaction endothermique, et l'on transfère le réactif gazeux désorbé au compresseur, et

on transfère le fluide caloporteur entre les réacteurs dans un ordre successif croissant des pressions de vapeur respectives des différents composés, au moins une partie de la chaleur libérée par la réaction d'adsorption exothermique étant transférée à un réacteur pour chauffer les composés s'y trouvant pour entraîner une réaction de désorption endothermique.

38. Procédé selon la revendication 37, dans lequel on choisit ladite pluralité de composés de telle manière que chacun des composés adsorbe et désorbe le même réactif gazeux à des températures respectives différentes auxdites pressions de réaction.

39. Procédé selon la revendication 38, dans lequel on introduit les composés dans des réacteurs successifs dans un ordre successif croissant des températures d'adsorption à la même pression d'adsorption.

40. Procédé selon la revendication 39, dans lequel on choisit les composés de manière que la température d'adsorption d'un composé, à la pression d'adsorption, soit supérieure à la température de désorption du composé ayant la pression de vapeur immédiatement inférieure, à la pression de désorption.

41. Procédé selon la revendication 37, dans lequel, dans le premier cycle de réactions, on pressurise une troisième partie des réacteurs à une troisième pression, de sorte que le composé s'y trouvant adsorbe le réactif gazeux dans une réaction exothermique, la seconde et la troisième pression étant différentes l'une de l'autre et supérieures à la première pression.

42. Procédé selon la revendication 41, dans lequel, dans le second cycle de réactions, on pressurise ladite troisième partie des réacteurs à la première ou la seconde pression, de sorte que le composé s'y trouvant désorbe le réactif gazeux dans une réaction endothermique.

43. Dispositif de pompe à chaleur mécanique ou actionnée par pression, comportant :
une pluralité de deux chambres de réaction ou plus (104, 105), chacune desdites chambres contenant un composé différent comprenant un réactif solide adsorbant et un réactif gazeux adsorbé sur celui-ci, chacun desdits composés ayant une pression de vapeur du réactif gazeux différente, sensiblement indépendante de la concentration du réactif gazeux,
lesdits composants ayant un ordre croissant des températures respectives d'adsorption à la même pression d'adsorption et de désorption, et où la température d'adsorption du composé à température d'adsorption plus basse à une haute pression de réaction est plus élevée que la température de désorption du composé ayant la température d'adsorption immédiatement supérieure à une basse pression de réaction,
dans lequel lesdits composés comprennent un réactif gazeux choisi dans le groupe constitué de : l'ammoniac, l'eau, le dioxyde de carbone, le dioxyde de soufre, un alcanol inférieur, une alcoylamine, une polyamine et une phosphine, et un sel inorganique solide choisi dans le groupe constitué de : un oxyde, halogénure, carbonate, oxalate, nitrate, nitrite, sulfite et sulfate d'un métal, où ledit métal est choisi dans le groupe constitué de : un métal alcalin, un métal alcalino-terreux, un métal de transition, l'aluminium, le zinc, le cadmium et l'étain, ou un sel solide comprenant un chlorure métallique double de métaux choisis dans le groupe constitué de : un métal alcalin, un métal alcalino-terreux, l'aluminium, le manganèse, le fer, le nickel et le cobalt, et
des moyens pour transférer de la chaleur d'un réacteur à composé adsorbant à haute pression à un réacteur à composé adsorbant à basse pression, et
un compresseur mécanique (100), des conduits (113, 114) et des valves (101) coopérant avec ceux-ci pour transférer ledit réactif gazeux à destination et en provenance de ladite pluralité de chambres de réaction en provenance et à destination du compresseur mécanique.

44. Dispositif selon la revendication 43, comportant des moyens pour transférer de la chaleur entre des chambres de réaction et des moyens extérieurs d'échange de chaleur.

FIG. 1

EP 0 500 527 B1

FIG. 2

EP 0 500 527 B1

FIG. 3

FIG. 4

FIG. 5

HEAT PUMP MEDIA

FIG. 6